(19) Europäisches Patentamt
European Patent Office
Office européen des brevets

(11) EP 1 010 735 A1

(12) EUROPEAN PATENT APPLICATION

(43) Date of publication:
**21.06.2000 Bulletin 2000/25**

(51) Int. Cl.[7]: **C09D 11/00**

(21) Application number: **99124866.7**

(22) Date of filing: **16.12.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.12.1998 JP 37590098**
**02.04.1999 JP 9578299**

(71) Applicant: **NEC CORPORATION**
**Tokyo (JP)**

(72) Inventors:
- **Onishi, Yasuharu**
  **Minato-ku, Tokyo (JP)**
- **Endoh, Hiroyuki**
  **Minato-ku, Tokyo (JP)**
- **Uezono, Tsutomu**
  **Minato-ku, Tokyo (JP)**
- **Hasegawa, Etsuo**
  **Minato-ku, Tokyo (JP)**

(74) Representative:
**VOSSIUS & PARTNER**
**Siebertstrasse 4**
**81675 München (DE)**

(54) **Water ink, ink jet recorder and ink reservoir**

(57) A water ink composed of at least water, a coloring material, an organic solvent and a surface active material, which contains at least one kind of surface active material represented by the following chemical formula (1) below is disclosed. Also, water ink composed of 5 parts of a water dye, 70 parts of water, 10 parts of polyethylene glycol with a mean molecular weight of 200, 15 parts of glycerin, 0.02 parts of ethylene oxide polymer with a mean molecular weight of 5,000 and 0.05 parts of a compound represented by the following chemical formula (2) is disclosed. The water ink is superior in ink jetting stability and drying property and less subject to spreading over or penetration through paper.

EP 1 010 735 A1

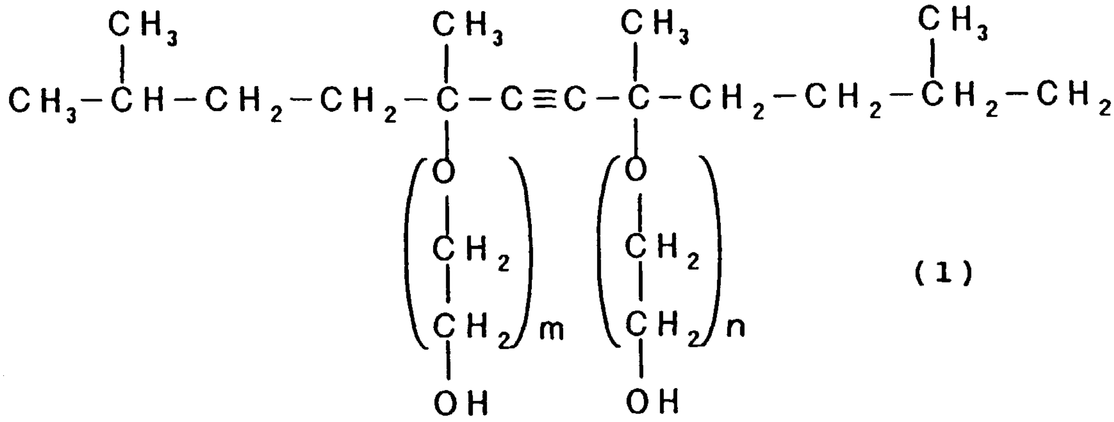

(1)

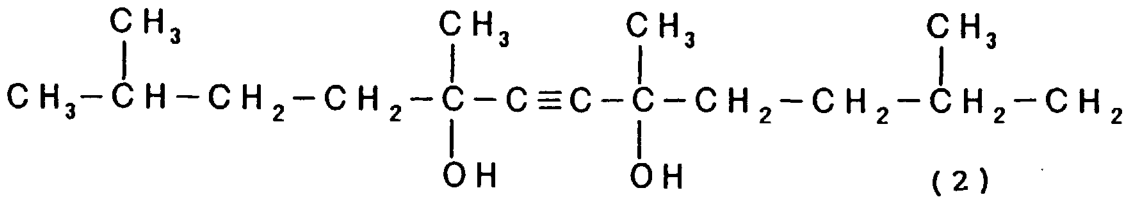

(2)

## Description

The present invention relates to water ink, which is superior in ink jetting stability and drying property and less subject to spreading over or penetration through paper in its use with ink jet recorders, ink jet recorders used in the same water ink and ink reservoir.

Ink jet recorders (or ink jet printers) are free from such processes as development and fixing as well as being able to readily produce color prints and also print on ordinary paper. Recently, water ink thus has been gaining revolutionary increasing popularity. With this trend, improved performance of ink used as liquid recording material in ink jet recorders has been desired. Specifically, it has been called for ink, which is excellent in ink jetting stability so that it poses no problem of clogging the nozzle orifice of recorder, is excellent in permeation property and quickly dried on printing paper, and is free from spreading over or penetration through paper so that it permits producing high quality prints.

Particularly, it has been in rapid progress to realize finer design and higher operation speed of ink jet printers, and color printers capable of printing on ordinary paper are commercially available. In these circumstances, the burden on IJ ink serving as recording liquid for ink jet printers has been increasing, and further performance improvement of this type of ink has been demanded.

However, such ink properties as ink jetting stability, drying property, permeation, spreading and penetration are correlated to one another, and considerable difficulties are encountered in an effort to develop ink which realizes all the above properties at high levels.

By way of example, Japanese Patent Laid-Open No. 3-25967 discloses a technique of obtaining ink, which is excellent in jetting property and free from any clogging problem. Ink obtainable in this technique contains a propylene glycol compound, thus providing for improved ink jetting stability. This ink, however, results in increased spreading over and penetration through paper. Therefore, it is difficult to permit color printing.

Japanese Patent Laid-Open No. 55-66976 discloses a technique of improving the spreading over and penetration through paper. The ink obtainable in this technique is composed of a volatile solvent which is used as a main component. The ink thus features improved penetration property and reduced spreading and penetration. However, although this ink can suppress the penetration or the like, its coloring material component is also permeated together with the solvent into paper, thus greatly reducing the color density.

Japanese Patent Laid-Open No. 6-240188 discloses a technique of improving the drying property and suppressing the spreading. The ink obtainable in this technique contains alkylamine oxide and 1,5-pentadiol as a water-soluble polymer, thus improving the drying property and reducing the spreading over paper. However, the ink is dried slowly, thus resulting in penetration and image density reduction. Therefore, high quality prints can not be obtained.

As will be seen from above, the prior art ink jet recorders and inks failed to realize all the properties of ink jetting stability, drying property, permeation and spreading over and penetration through paper at high levels.

The demerits of the above prior art inks are summarized as follows. The ink disclosed in the Japanese Patent Laid-Open No. 3-25967, although improving the ink jetting stability, results in increased spreading over and penetration through paper, thus making it difficult to permit color printing. The ink disclosed in the Japanese Patent Laid-Open No. 55-66976, although suppressing the spreading over and penetration through paper, results in great color density reduction. The ink disclosed in the Japanese Patent Laid-Open No. 6-240188, although improving the drying property and suppressing the spreading, results in penetration and image density reduction, thus making it impossible to obtain high quality prints.

Among the present IJ ink performance demands are (1) freedom from the possibility of clogging ink nozzle orifice, thus ensuring excellent ink jetting stability, (2) capability of being quickly dried on printing paper surface, thus ensuring excellent permeation property and (3) freedom from spreading over or penetration through paper, thus permitting obtaining high quality print images. However, it is well known in the art that the ink jetting stability, the drying property, the permeation property, the anti-spreading property and the anti-penetration property which are considered in the above demands (1) to (3), are correlated to one another, and no ink which can meet all the above properties has yet been developed as will be described hereinunder.

The present invention has an object of providing water ink and an ink jet recorder used therewith, which can solve the problems discussed above and ensure improved ink jetting stability, drying property and permeation property and less spreading over and penetration through paper.

According to the present invention, there is provided water ink composed of at least water, a coloring material, an organic solvent and a surface active material, which contains at least one kind of surface active material represented by the chemical formula:

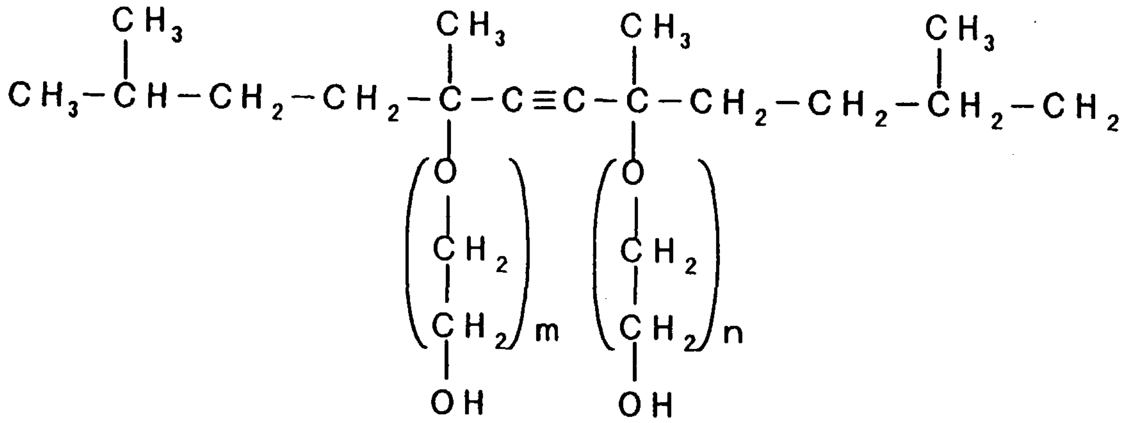

According to the present invention, there is provided an ink jet recorder comprising: an ink jet recording head having a nozzle orifice for jetting ink drops onto paper as a recording medium; an ink reservoir; an ink feeder means for feeding ink from the ink reservoir to the recording head; and the ink reservoir containing the water ink.

According to the present invention, there is provided Water ink composed of one or more members of the group consisting of acetylene glycol compounds represented by the following chemical formula:

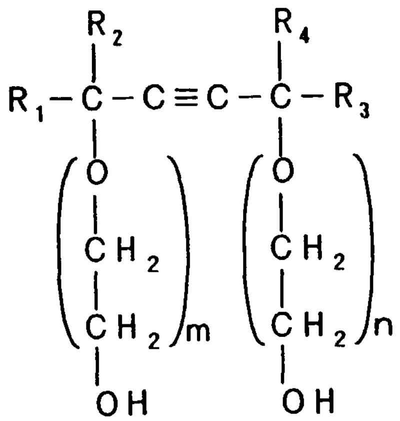

(where R1 and R3 each represent an alkyl group with a carbon number of 4 to 17 and having a branch, R2 and R4 each represent an alkyl group with a carbon number of 1 to 10, and m and n are each zero or a positive integer), one or more members of the group consisting of alkylene oxide polymers represented by the following chemical formula:

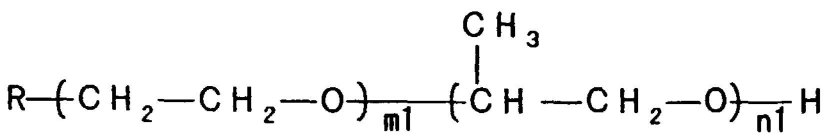

(where m1 and n1 are each zero or a positive integer, and R represents a member of the group consisting of H, an alkyl group with a carbon number of 1 to 10 and an alkoxyl group with a carbon number of 1 to 10), a coloring material, and water.

According to the present invention, there is provided an ink reservoir having an ink chamber for storing the water ink, wherein at least a portion of the ink chamber that is to be in contact with the water ink is made of a material inert thereto.

Other objects and features will be clarified from the following description.

Preferred embodiments of the present invention will now be described.

Water ink embodying the present invention is composed of water, a coloring material and an organic solvent and contains at least one of acetylene glycol type surface active materials represented by the following chemical formula (1).

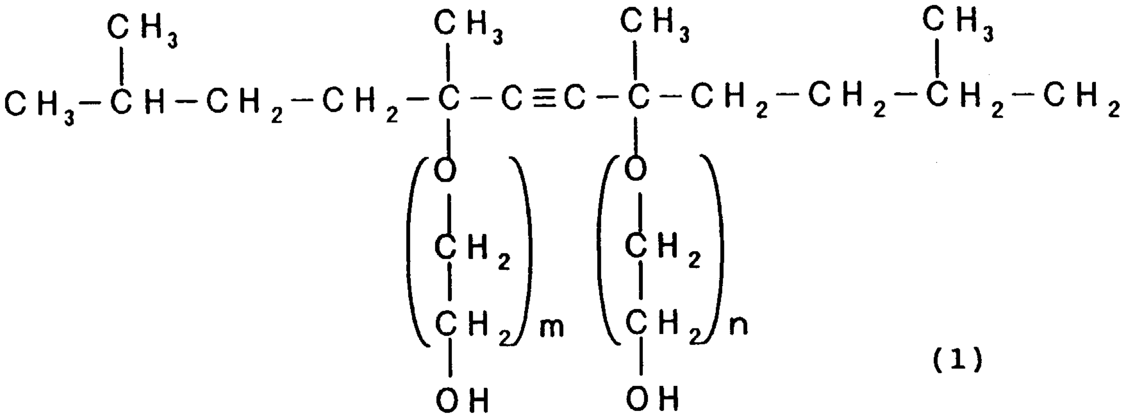

(1)

In the chemical formula (1), m and n are integers. The surface active material which is added as a component of ink, is by no means limitative so long as it is an acetylene glycol compound having a central structure with an acetylene bond and represented by the chemical formula (1). Following chemical formula (2) represents an example of this compound.

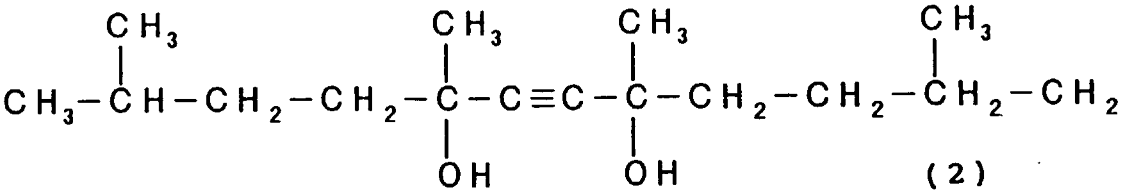

(2)

From the standpoint of the affinity with the remaining ink composition, however, the compound is preferably acetylene-oxide-added acetylene glycol represented by the chemical formula (1).

In the chemical formula (1), m1 and n1 are each 1 or a greater integer. The compound represented by the chemical formula (1) is by no means limitative so long as it is an acetylene glycol compound, which has a molecular weight of at least 30, has an acetylene-oxide-added structure with a center acetylene bond and is represented by the chemical formula (1) (where m and n are each 1 or a greater integer). Following chemical formulas represent examples of acetylene glycol compound.

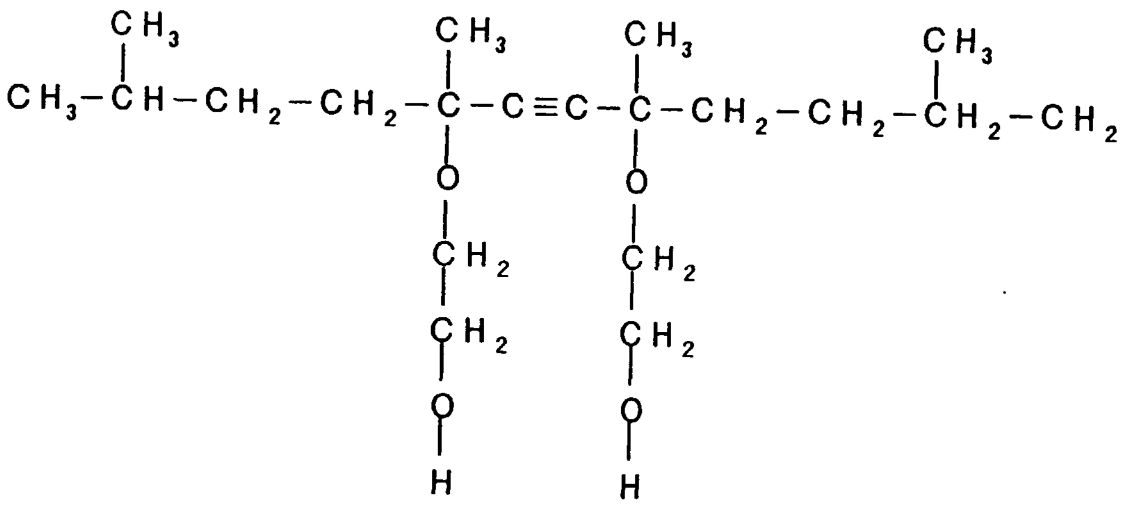

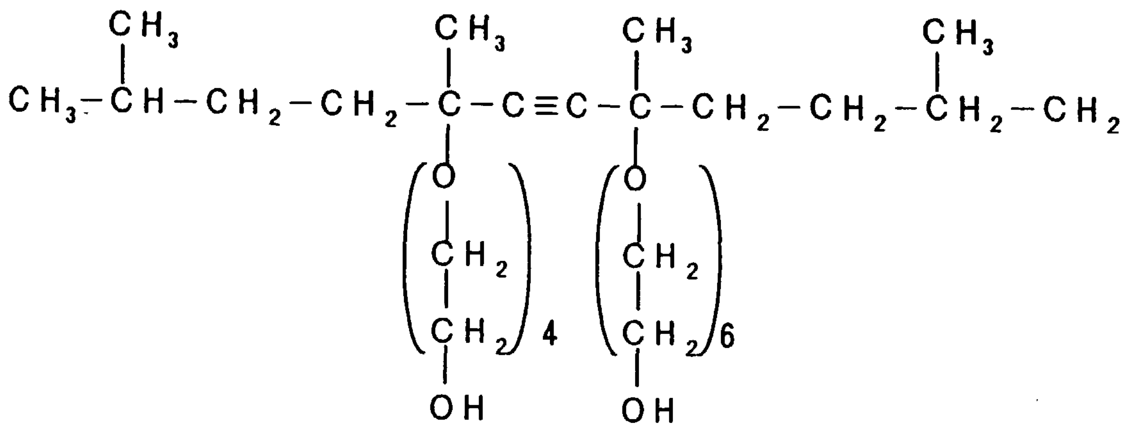

From the standpoint of the affinity with the remaining ink composition, an acetylene glycol compound represented by the chemical formula (1) with (m + n) being an integer ranging from 1 to 30 is preferred.

In composition, the embodiment of water ink preferably contains 0.01 to 1.0 % by weight of the acetylene glycol compound of chemical formula (1). If the content of the acetylene glycol compound of the chemical formula (1) in ink is less than 0.01 % by weight, the obtainable effect of improving the penetration property and spreading of ink is insufficient. If the content is more than 1.0 % by weight, it is undesired in that the acetylene glycol compound no longer has perfect affinity in the ink and also that the viscosity thereof is extremely increased.

In the embodiment of water ink containing the acetylene glycol compound of the chemical formula (1), the coloring material is preferably a water dye. By using a water dye as the coloring material of ink, it is possible to improve the performance of ink, reduce spreading thereof and obtain high quality print images. As the water dye may be used acidic dyes, basic dyes, direct dyes and edible dyes. Specific examples are direct black 19, direct black 32, direct black 38, direct black 51, direct black 62, direct black 71, direct black 105, direct black 108, direct black 112, direct black 154, direct black 168, acid black 24, acid black 31, acid black 52, acid black 94, food black 1, food black 2, direct yellow 86, direct yellow 100, acid yellow 23, acid yellow 42, direct red 83, direct red 227, acid red 87, acid red 186, acid red 254, acid red 289, direct blue 76, direct blue 86, direct blue 108, direct blue 199, direct blue 236, acid blue 9, acid blue 78, acid blue 82 and acid blue 234. These examples are by no means limitative.

The embodiment of water ink preferably contains 1 to 10 % by weight of the coloring material. If the content of the coloring material in ink is more than 10 % by weight, the coloring material is not perfectly dissolved and partly

precipitate in ink, thus extremely increasing the viscosity and also possibly resulting in clogging when jetting ink. If the content of the coloring material is less than 1 % by weight, the dye concentration is low, resulting in low image density on paper. Therefore, high quality print images may not be obtained.

The embodiment of water ink uses water as liquid for dissolving or dispersing the coloring material. From the standpoint of dye stability, the water used is preferably ion exchange water. However, it is possible to use commercially available distilled water as well.

The embodiment of water ink uses an organic solvent. Examples of organic solvent are ethylene glycol, diethylene glycol, propylene glycol, triethylene glycol, tetraethylene glycol, polyethylene glycol with a mean molecular weight (hereinafter referred to as MW) of 200, polyethylene glycol with MW of 300, polyethylene glycol with MW of 600, ethylene glycol monomethylether, ethyleneglycol monoethylether, ethyleneglycol monobutylether, methyl carbitor, ethyl carbitor, butyl carbitor, ethylcarbitor acetate, diethyl carbitor, triethyleneglycol monometylether, triethyleneglycol monoethylether, triethyleneglycol monobutylether, glycerin, triethanolamine, formaldehyde, dimethylformamide, dimethyl sulfoxide, N-methyl-2-pyrrolidone and 1,3-dimethylimidazolyl. These examples are by no means limitative. These organic solvents are used as permeation agent and coloring material dissolution promoting agent, and their content is preferably 50 % by weight or less. With ink containing more than 50 % of organic solvent, high quality print images may not be obtained.

The embodiment of water ink may contain well-known additives. For example, it is possible to add potassium carbonate, sodium carbonate, triethanolamine, etc. as pH adjusting agent. It is also possible to add sodium benzoate, etc. as anti-corrosion agent. It is further possible to add diethylenetriamine-5-acetic acid as chelating agent. The above additives which may be incorporated in this embodiment of water ink are by no means limitative.

The static surface tension of the embodiment of water ink is preferably 20 to 50 dynes/cm. In this embodiment, the static surface tension is referred to as such when the ink surface is stationary. More specifically it is referred to as such 30 seconds after ink surface formation. It can be measured by, for instance, a Wilherm plate suspension method. If it is above 50 dynes/cm or below 20 dynes/cm, the permeating property and drying property may be unsatisfactory, and high quality print images may not be obtained.

In the embodiment of water ink, the contact angle 30 seconds after attaching it to the head member of the ink jet recorder (i.e., static contact angle) is preferably at most 10 degrees. The static contact angle can be measured by a dropping method (1/2θ). The contact angle 30 seconds after attaching ink means is defined as an angle between ink and a measuring instrument plate 30 seconds after attaching ink thereto. By the term "head member" is meant the entire member constituting the recording head of the ink jet recorder. Examples of this member are Ni plate, SUS304 plate, etc. These examples are by no means limitative. With a contact angle of more than 10 degrees 30 seconds after attaching ink, the wetting property of ink in ink passage of the recording head may be unsatisfactory, possibly resulting in air bubble trapping in the ink passage and extremely deteriorated ink jetting stability.

In the embodiment of water ink, the contact angle 0.1 second after attaching thereof to the head member of the ink jet recorder (i.e., dynamic contact angle) is preferably at most 30 degrees. The dynamic contact angle can be measured by the dropping method (1/2θ). The contact angle 0.1 second after attaching ink is defined as an angle between ink and the measuring instrument plate 0.1 second after attaching ink thereto. With a contact angle of more than 30 degrees 0.1 second after attaching ink to the head member, the wetting property of ink in ink passage of the recording head may be unsatisfactory, resulting in air bubble trapping in the ink passage and extremely deteriorated ink jetting stability.

The viscosity of the embodiment of water ink is preferably adjusted to be in a range of 1 to 5 cps. With a viscosity of more than 5 cps, the ink jetting stability of the recording head may be unsatisfactory, and high quality print images cannot be obtained. With a viscosity of less than 1 cps, the ink jetting stability may also be unsatisfactory, and high quality print images may not be obtained.

In the embodiment of water ink, the pH is preferably adjusted to be in a range of 6 to 10. By adjusting the pH of water ink to be in the range of 6 to 10, it is possible to obtain improved shelf time, eliminate variations of such physical properties as the surface tension and viscosity and further improve the permeation property. Thus, high quality print images may be obtained.

The embodiment of water ink finds a main application to the ink jet recorder for printing or recording by jetting out ink drops. The ink jet recorder comprises at least an ink jet recording head having a nozzle orifice for jetting out ink drops onto paper as recording medium, an ink reservoir accommodating ink, i.e., the embodiment of water ink, and an ink feeder means for feeding water ink from the reservoir to the recording head. The embodiment of water ink, however, may be used not only for the ink jet recorder but also for various other purposes as well.

Examples of the present invention will now be described. These examples, however, are by no means limitative so long as the scope of the present invention is not departed. The examples of water ink embodying the present invention were each prepared by mixing the components of each water ink composition given hereinunder in a beaker and filtering the blend thus obtained through an "Omnipore type JA" membrane filter. The static surface tension, the viscosity and the pH of these examples were measured. The static surface tension was measured at a temperature of

20°C by using a Wilhermy surface tension meter (i.e., "Automatic surface tension meter CBVP-A3" manufactured by Kyowa Kaimen Kagaku Co., Ltd.). The viscosity was measured at a temperature of 20°C by using "Automatic viscosity meter DVM-E2" manufactured by Tokimec Co., Ltd. The pH was measured at a temperature of 20°C by using "Personal pH meter PH81" manufactured by Yokogawa Electric Co., Ltd.

EXAMPLE 1

This example of water ink was prepared from ink composition 1, i.e., 5 parts of a dye, 70 parts of water, 15 parts of "polyethylene glycol #200", 10 parts of glycerin and 0.05 parts of exemplified compound 1.

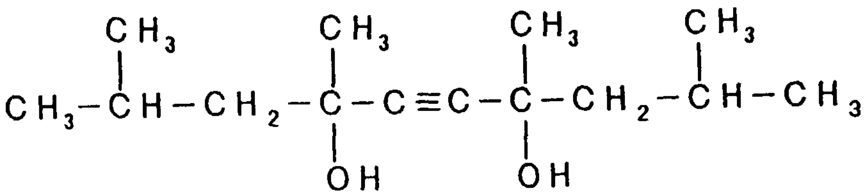

Of the ink composition of this example, the static surface tension was $\gamma$ = 33.6 dynes/cm, the viscosity was $\eta$ = 3.3 cps, and the pH was 8.21.

EXAMPLE 2

This example was prepared from ink composition 2, i.e., 5 parts of a dye, 70 parts of water, 15 parts of "polyethylene glycol #200", 10 parts of glycerin and 0.1 parts of exemplified compound 1.

Of the ink composition of this example, the static surface tension was $\gamma$ = 29.8 dynes/cm, the viscosity was $\eta$ = 3.3 cps, and the pH was 8.06.

EXAMPLE 3

This example was prepared from ink composition 3, i.e., 5 parts of a dye, 70 parts of water 15 parts of "polyethylene glycol #200", 10 parts of glycerin and 0.2 parts of exemplified compound 1.

Of the ink composition of this example, the static surface tension was $\gamma$ = 27.0 dynes/cm, the viscosity was $\eta$ = 3.5 cps, and the pH was 7.96.

EXAMPLE 4

This example was prepared from ink composition 4, i.e., 5 parts of a dye, 70 parts of water, 15 parts of "polyethylene glycol #200", 10 parts of glycerin and 0.05 part of exemplified compound.

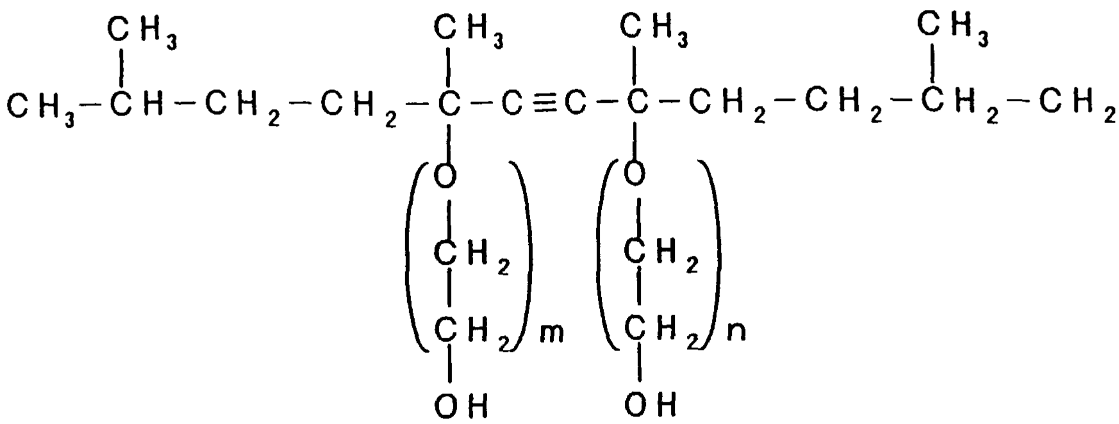

where $m + n = 10$ .

Of the ink composition of this example, the static surface tension was $\gamma$ = 34.2 dynes/cm, the viscosity was $\eta$ = 3.6 cps, and the pH was 7.56.

EXAMPLE 5

This example was prepared from ink composition 5, i.e., 5 parts of a dye, 70 parts of water, 15 parts of "polyethylene glycol #200", 10 parts of glycerin and 0.1 parts of exemplified compound 2.
Of the ink composition of this example, the static surface tension was $\gamma$ = 30.2 dynes/cm, the viscosity was $\eta$ = 3.7 cps, and the pH was 7.11.

EXAMPLE 6

This example was prepared from ink composition 6, i.e., 5 parts of a dye, 70 parts of water, 15 parts of "polyethylene glycol #200", 10 parts of glycerin and 0.2 parts of exemplified compound 2.
Of the ink composition of this example, the static surface tension was $\gamma$ = 26.1 dynes/cm, the viscosity was $\eta$ = 3.9 cps, and the pH was 7.03.

EXAMPLE 7

This example was prepared from ink composition 7, i.e., 5 parts of a dye, 70 parts of water, 15 parts of "polyethylene glycol #200", 10 parts of glycerin and 0.05 parts of exemplified compound 3.

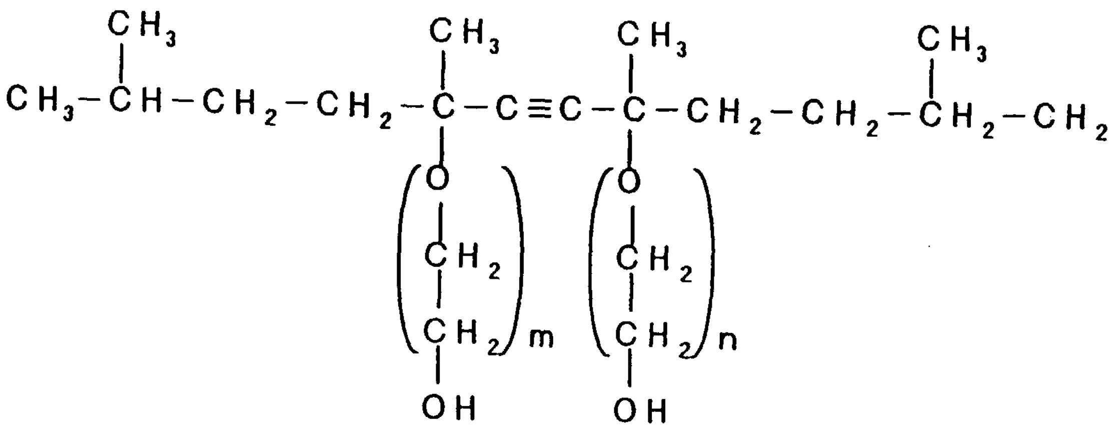

where m + n = 30 .
Of the ink composition of this example, the static surface tension was $\gamma$ = 31.1 dynes/cm, the viscosity was $\eta$ = 4.1 cps, and the pH was 8.22.

EXAMPLE 8

This example was prepared from ink composition 8, i.e., 5 parts of a dye, 70 parts of water, 15 parts of "polyethylene glycol #200", 10 parts of glycerin and 0.1 parts of exemplified compound 9.
Of the ink composition of this example, the static surface tension was $\gamma$ = 29.7 dynes/cm, the viscosity was $\eta$ = 4.3 cps, and the pH was 8.33.

EXAMPLE 9

This example was prepared from ink composition 9, i.e., 5 parts of a dye, 70 parts of water, 15 parts of "polyethylene glycol #200", 10 parts of glycerin and 0.2 parts of exemplified compound 3.
Of the ink composition of this example, the static surface tension was $\gamma$ = 27.6 dynes/cm, the viscosity was $\eta$ = 4.8 cps, and the pH was 8.24.
Contrast examples will now be given.

CONTRAST EXAMPLE 1

This contrast example of water ink was prepared from the composition shown hereinunder without use of any surface active material. Specifically, this water ink was prepared by mixing the components of the ink composition in a beaker and filtering the blend thus obtained through an "Omnipore type JA" membrane filter. The static surface tension, the viscosity and the pH were measured in the same methods as used for the above examples.

Ink composition 10, i.e., 5 parts of a dye, 70 parts of water, 15 parts of "polyethylene glycol #200" and 10 parts of glycerin, was used.

Of the ink composition of this contrast example, the static surface tension was $\gamma$ = 42.7 dynes/cm, the viscosity was $\eta$ = 3.3 cps, and the pH was 8.91.

CONTRAST EXAMPLE 2

This contrast example was prepared from an ink composition obtained by adding 0.2 % by weight of exemplified compound 4 (represented by chemical chemical formula 5 given below) of the ink composition of Contrast Example 1. The surface tension, the viscosity and the pH were measured in the same methods as for Contrast Example 1.

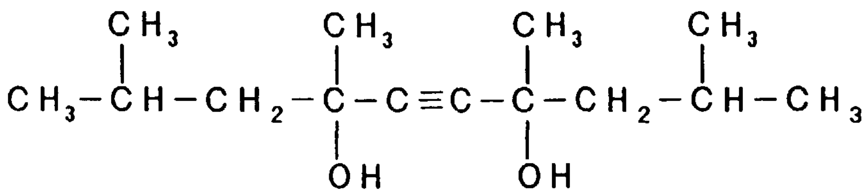

Of the ink composition of this contrast example, the static surface tension was $\gamma$ = 32.4 dynes/cm, the viscosity was $\eta$ = 3.4 cps, and the pH was 8.51.

CONTRAST EXAMPLE 3

This contrast example was prepared from an ink composition obtained by adding 0.2 % by weight of exemplified compound 5 (represented by chemical chemical formula given below) to the ink composition of Contrast Example 1. The surface tension, the viscosity and the pH were measured in the same methods as for Contrast Example 1.

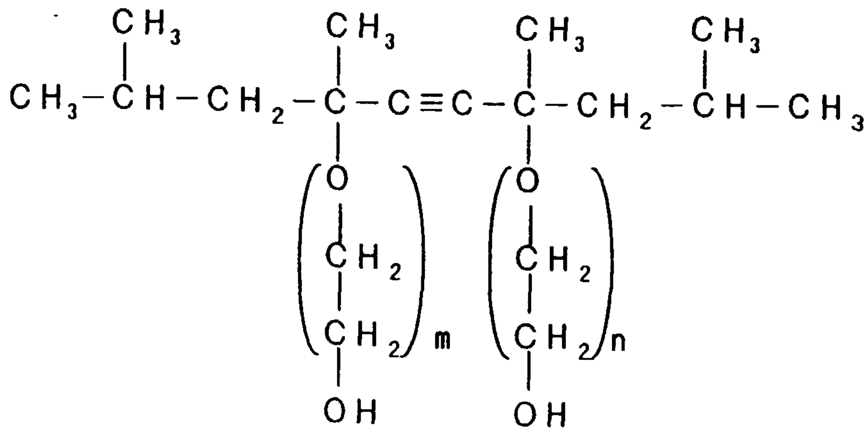

where $m + n = 4$ .

Of the ink composition of this contrast example, the static surface tension was $\gamma$ = 35.8 dynes/cm, the viscosity was $\eta$ = 3.4 cps, and the pH was 8.67.

CONTRAST EXAMPLE 4

This contrast example was prepared from an ink composition obtained by adding 0.2 % by weight of exemplified compound 6 (represented by chemical chemical formula given below) to the ink composition of Contrast Example 1. The surface tension, the viscosity and the pH were measured in the same methods as for Contrast Example 1.

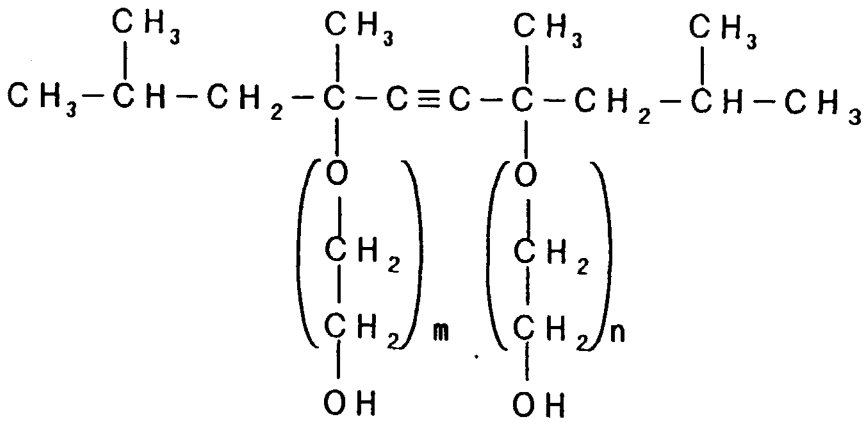

where m + m = 10.

Of the ink composition of this contrast example, the static surface tension was $\gamma$ = 36.3 dynes/cm, the viscosity was $\eta$ = 3.6 cps, and the pH was 8.44.

CONTRAST EXAMPLE 5

This contrast example was prepared from an ink composition obtained by adding 0.2 % by weight of exemplified compound 7 (represented by chemical chemical formula given below) to the ink composition of Contrast Example 1. The surface tension, the viscosity and the pH were measured in the same methods as for Contrast Example 1.

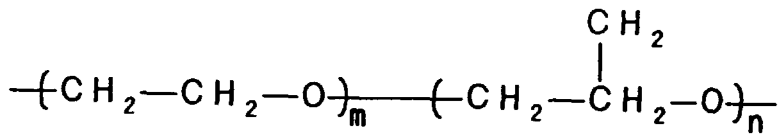

where $m + n > 30$ .

Of the ink composition of this contrast example, the static surface tension was $\gamma$ = 26.4 dynes/cm, the viscosity was $\eta$ = 3.8 cps, and the pH was 8.96.

Evaluation results will now be given.

(Evaluation reference 1)

As the static contact angle, one 30 seconds after attaching ink to SUS304 plate was measured. As measuring plate, a SUS plate (with a surface roughness of ▽▽▽ ▽) was used. The measuring temperature was set to 20°C.

(Evaluation reference 2)

As the dynamic contact angle, one 0.1 second after attaching ink to SUS304 plate was measured. As measuring plate, a SUS plate (with a surface roughness of ▽▽▽ ▽) was used. The measuring temperature was 20°C.

(Evaluation reference 3)

Test printing was made by using a piezo ink jet printer having a resolution of 720 dpi, and image sharpness

was confirmed. As recording paper, commercially available re-circulation paper sheets were used.

1) Spreading test: Spreading was judged from print images.

○: Not spread
△: Slightly spread
X: Spread

2) Drying test: Drying time of print samples was checked.

○: Drying time is not longer than 10 seconds.
X: Drying time is longer than 10 seconds.

3) Water-proof property tester: Print samples were held dipped in water for 30 seconds, and image density changes were checked. Color density was measured by using a color meter (L*, a*, b*), and the image density changes are judged from the rate ΔE of change in the color density. ΔE is expressed as follows:

$$\Delta E = \sqrt{((A^*-a^*)^2 + (B^*-b^*)^2 + (C^*-c^*)^2)}$$

○: ΔE is less than 10.
X: ΔE is more than 10.

(Evaluation reference 4)

Printing was done on 100 A4 printing paper sheets, and the ink jetting stability was checked.

○: All print images are satisfactory.
X: Abnormal print images are found.

(Evaluation reference 5)

The shelf stability of the ink composition was checked. Specifically, ink was preserved in a polyethylene container at 60°C for one month, and then changes in the surface tension, the viscosity and the pH and also any precipitate were checked.

○: Substantially no physical property changes are detected and no precipitate was confirmed.
X: Physical property changes were detected, and precipitate was confirmed.

Evaluation results are shown in Table 1.

TABLE 1

| | STATIC CONTACT ANGLE | DYNAMIC CONTACT ANGLE | SPREADING | DRYING TIME | WATER-PROFF PROPETY | INK JETTING STABILITY | SHELF STABILITY |
|---|---|---|---|---|---|---|---|
| EXAMPLE1 | 17.8 | 31.1 | ○ | △ | ○ | × | ○ |
| EXAMPLE2 | 9.3 | 27.6 | ○ | ○ | ○ | ○ | ○ |
| EXAMPLE3 | <5.0 | 24.4 | ○ | ○ | ○ | ○ | ○ |
| EXAMPLE4 | 21.6 | 29.0 | ○ | △ | ○ | ○ | ○ |
| EXAMPLE5 | 7.1 | 21.1 | ○ | ○ | ○ | ○ | ○ |
| EXAMPLE6 | <5.0 | 12.9 | ○ | ○ | ○ | ○ | ○ |
| EXAMPLE7 | 26.3 | 33.4 | ○ | △ | △ | ○ | ○ |
| EXAMPLE8 | 22.1 | 29.4 | ○ | ○ | △ | ○ | ○ |
| EXAMPLE9 | 17.1 | 23.1 | ○ | ○ | △ | ○ | ○ |
| CONTARST EXAMPLE1 | 34.0 | 44.5 | × | × | × | × | ○ |
| CONTARST EXAMPLE2 | 9.6 | 30.7 | △ | △ | ○ | ○ | × |
| CONTARST EXAMPLE3 | 10.9 | 31.5 | ○ | △ | △ | △ | △ |
| CONTARST EXAMPLE4 | 13.1 | 33.1 | △ | ○ | △ | ○ | × |
| CONTARST EXAMPLE5 | 29.6 | 43.1 | × | △ | × | × | × |

As has been shown above, with water ink and ink let recorder using the same water ink according to the present invention, it is possible to ensure high ink jetting property, drying property and permeation property of water ink according to the present invention and also less spreading over and penetration through paper.

Also, it is possible to ensure excellent water-proof property of print images of prints obtained according to the present invention.

Furthermore, water ink according to the present invention has excellent shelf stability.

Now, other embodiments will be described.

Water ink according to the present invention is composed of one or more members of the group consisting of acetylene glycol compounds represented by the following chemical formula (3) and one or more members of the group consisting of alkylene oxide polymers represented by the following chemical formula (4), and preferably contains the acetylene glycol compound or compounds and the alkylene oxide polymer or polymers in a weight ratio of 0.01 to 10 : 0.01 to 5.

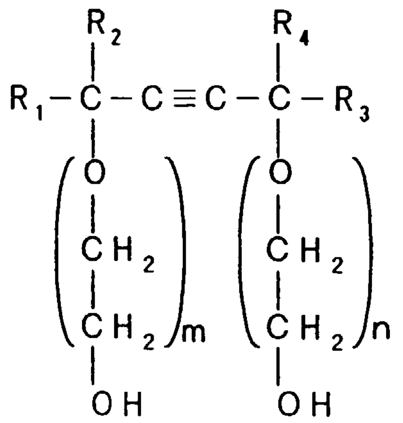

(3)

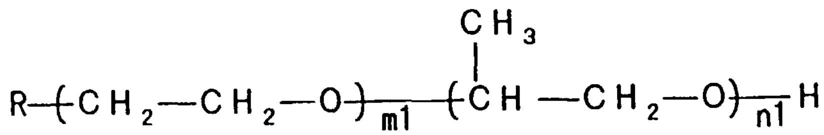

(4)

Also, water ink according to the present invention may contain a water dye as coloring material. Preferably, the weight ratio of the acetylene glycol compound or compounds and the water dye is preferably 0.01 to 10 : 1 to 10.

Furthermore, water ink according to the present invention may contain one or more organic solvents, and the weight ratio of the acetylene glycol compound or compounds and the organic solvent or solvents is preferably 0.01 to 10 : 5 to 50. Yet further, water ink according to the present invention contains water in such an amount as to be able to dissolve or disperse the water dye. The weight ratio between the water dye and the water contained may be 0.1 to 10 : 25 to 94.88. (Acetylene glycol compound represented by the chemical formula (3))

R1 and R3 in the chemical formula (3) each represent an alkyl group with a carbon number of 4 to 17 and having a branch. In this group, carbon atoms may be coupled together such that at least one branch is formed. Preferably, this alkyl group is formed with coupling of more than one alkyl groups such that one or more branches are formed with respect to a branch-free main carbon atom chain.

R1 and R3 in chemical formula (8) more preferably each represent an alkyl group formed with coupling of more than one alkyl groups with carbon numbers of 1 to 10, preferably 1 to 5, such that one or more branches are formed with respect to a branch-free main carbon atom chain with a carbon number of 3 to 7. The carbon atoms in the main chain, which alkyl groups are coupled to, may be at positions most spaced apart from the triple carbon bond in the chemical formula (3) under having a branch. The alkyl group or groups coupled to the main chain may each either have or do not have one or more branches. R1 and R3 in the chemical formula (3) may represent the same alkyl group.

R2 and R4 in chemical formula (3) may each represent an alkyl group with a carbon number of 1 to 10, preferably 1 to 5, and having no or one or more branches. R2 and R4 in chemical formula (3) may represent the same alkyl group.

An example of acetylene glycol compound represented by the chemical formula (3) is one represented by the following chemical formula:

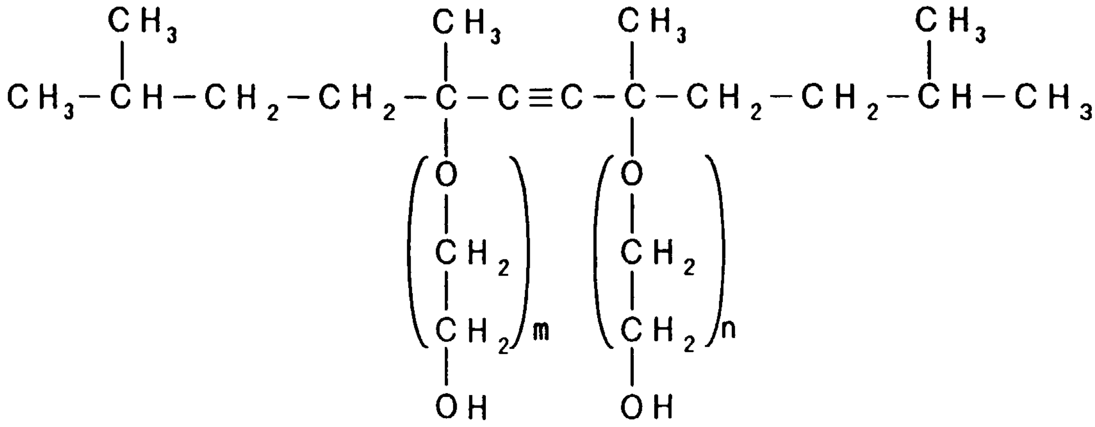

where m and n are each zero or a positive integer.

Another example of acetylene glycol compound represented by the chemical formula (3) is compound 1 represented by the following chemical formula.

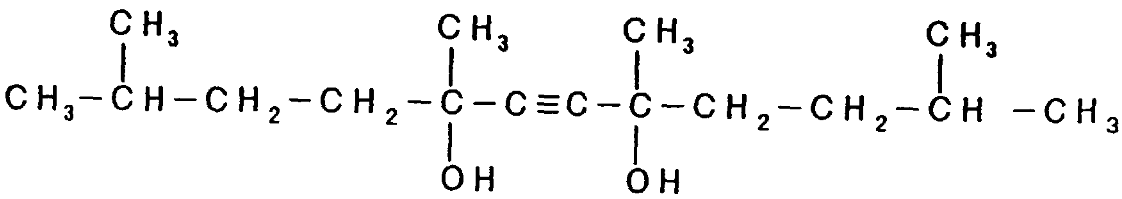

From the standpoint of the solubility of ink, the acetylene compound of chemical formula (3) is preferably ethylene-oxide-added acetylene glycol represented by the following chemical formula (5).

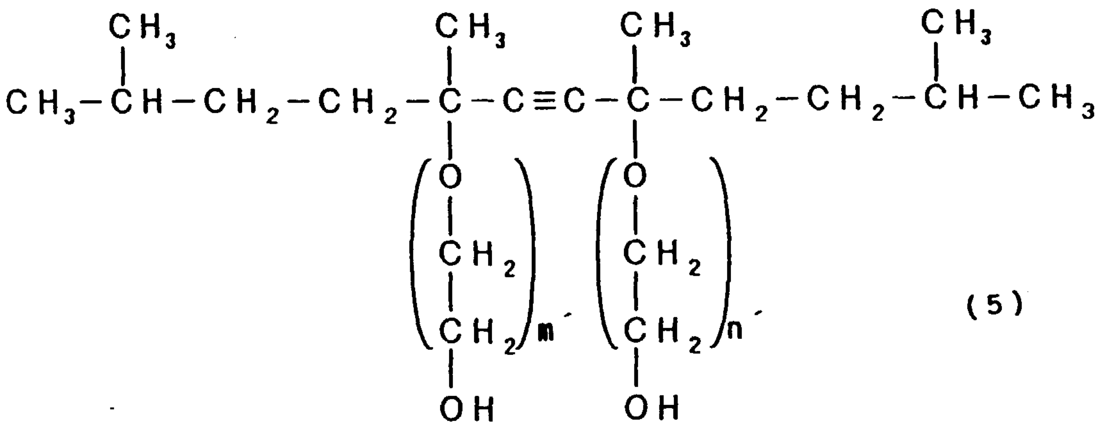

(5)

where m' and n' are each 1 or a greater integer.

The ethylene-oxide-added acetylene glycol represented by the above chemical formula (5) is by no means limitative so long as it is an acetylene glycol compound represented by the chemical formula (3) (where m and n are each 1 or a greater integer), which has a molecular weight of at least 30, has a center acetylene bond and contains added ethylene oxide.

An example of such ethylene-oxide-added acetylene glycol compound is compound 2 represented by the following chemical formula.

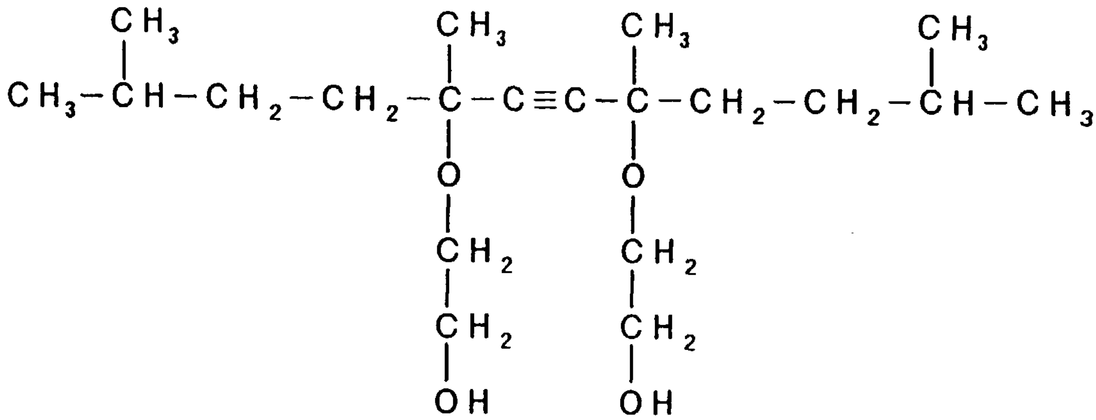

Another example of ethylene-oxide-added acetylene glycol compound is compound 3 represented by the following chemical formula.

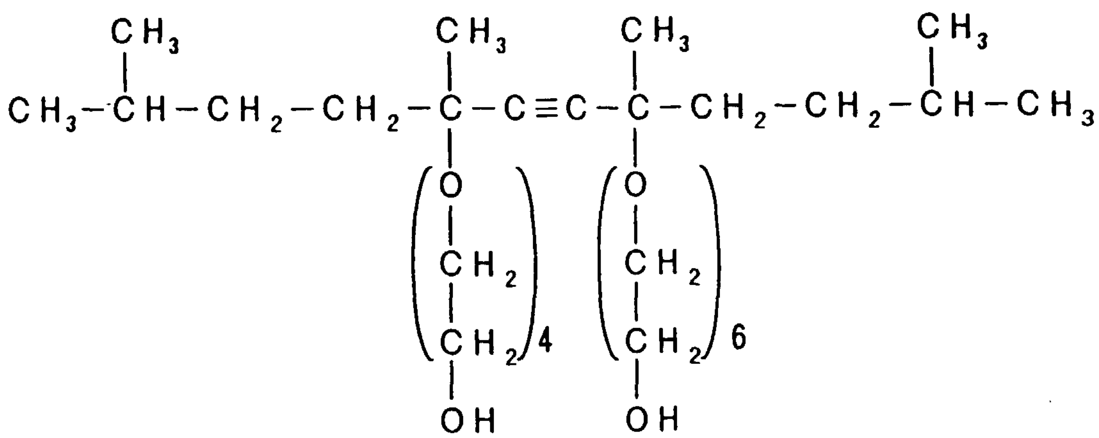

From the standpoints of the water-proof property and the on-paper drying property of ink, (m + n) in the chemical formula (3) or (5) representing the acetylene glycol compound is preferably 1 to 30.

The water ink composition according to the present invention preferably contains 0.01 to 10.0 % by weight of acetylene glycol compound of the chemical formula (3). If the content of the acetylene glycol compound of the chemical formula (3) in water ink is less than 0.01 % by weight, the ink jetting property may be improved insufficiently. If the content of the acetylene glycol compound of the chemical formula (3) is greater than 10.0 % by weight, the viscosity of ink may be extremely increased to result in ink jetting failure.

(Alkylene oxide polymer represented by chemical formula (4))

Compounds like acetylene glycol compounds represented by chemical formula (3) are usually said to have low water solubility. By way of example, the upper limit of the solubility of the compound of chemical formula (3) when added to water ink composition containing about 70 % by weight of water, is about 0.5 % by weight.

Therefore, when it is added to the water ink composition under a low upper solubility limit condition, the compound of chemical formula (3) may be precipitated as non-dissolved material in ink, thus resulting in ink jetting failure. It is accordingly necessary to improve the solubility of the compound of chemical formula (3) to the water ink composition. According to the present invention, the compound of chemical formula (4) is used as dissolution promoter for the dissolution of the acetylene glycol compound of chemical formula (3) in the water ink composition.

By using the compound of chemical formula (4) as dissolution promoter together with the polymer of chemical formula (4), the solubility of the compound of chemical formula (3) to ink is extremely improved. The polymer of chemical formula (4) is by no means limitative so long as it is selected from the group consisting of ethylene oxide polymer, propylene oxide polymer and ethylene oxide-propylene oxide copolymer. Preferably, water ink according to the present invention contains 0.01 to 5.0 % by weight of the polymer of chemical formula (4). If the content of the polymer of chemical formula (4) is less than 0.01 % by weight, less effect of the polymer as dissolution promoter may be obtained. If the content is greater than 5 % by weight, the viscosity may be extremely increased.

(Water dye)

In water ink according to the present invention, the coloring material is preferably a water dye. By using a water dye as the coloring material of ink, it is possible to improve the performance of ink and obtain high quality print images with less spreading of ink.

As the water dye may be used acidic dyes, basic dyes, direct dyes and edible dyes. Examples of water dye are direct black 19, direct black 32, direct black 38, direct black 51, direct black 62, direct black 71, direct black 105, direct black 108, direct black 108, direct black 112, direct black 154, direct black 168, acid black 24, acid black 31, acid black 52, acid black 94, food black 1, food black 2, direct yellow 86, direct yellow 100, acid yellow 23, acid yellow 42, direct red 83, direct red 227, acid red 87, acid red 186, acid red 254, acid red 289, direct blue 76, direct blue 86, direct blue 108, direct blue 199, direct blue 236, acid blue 9, acid blue 78, acid blue 82 and acid blue 234. These examples are by no means limitative.

Water ink according to the present invention preferably contains 1 to 10 % by weight of water dye. If the content of the water dye in ink is more than 10 % by weight, the water dye may fail to be dissolved perfectly, resulting in its partial precipitation in water ink and extreme increase of the viscosity. Furthermore, the nozzle orifice tends to be clogged by ink being jetted out. If the content of the water dye in ink is less than 1 % by weight, the image concentration on paper is low due to low dye concentration, and high quality print images may not be obtained.

(Water)

Water ink according to the present invention contains ink as liquid for dissolving or dispersing the water dye. From the standpoint of the dye stability, the water that is used preferably ion exchange water. However, it is possible to use commercially available distilled water as well.

(Organic solvent)

Water ink according to the present invention contain an organic solvent. Examples of organic solvent are ethylene glycol, diethylene glycol, propylene glycol, triethylene glycol, tetraethylene glycol, polyethylene glycol (with a mean molecular weight (hereinafter referred to as MW) of 200), polyethylene glycol (with MW of 300), polyethylene glycol (with MW of 600), ethyleneglycol monmethylether, ethyleneglycol monoethylether, ethyleneglycol monobutylether, methyl carbitor, ethyl carbitor, butyl carbitor, ethylcarbiytor acetate, diethyl carbitor, triethyleneglycol monomethylether, triethyleneglycol monoethylether, triethyleneglycol monobutylether, glycerihn, triethanol amine, formamide, dimethyl formamide, dimethyl surfoxide, N-methyl-2-pyrrolidone and 1,3-dimethyl imidasolidine. These examples are by no means limitative.

The organic solvent is used as permeation agent and dye dissolution promoting agent, and its content in water ink is preferably 50 % by weight. If the content of the organic solvent in ink is more than 50 % by weight, high quality print images may not be obtained. Also, the nozzle orifice may be clogged by ink being jetted out, resulting in ink jetting failure.

(Additives)

The embodiment of water ink may contain well-known additives. For example, it is possible to add potassium carbonate, sodium carbonate, triethanolamine, etc. as pH adjusting agent. These compounds are by no means limitative. It is also possible to add sodium benzoate, etc. as anti-corrosion agent. Again these compound are by no means limitative. It is further possible to add diethylenetriamine-5-acetic acid as chelating agent. Again these compounds are by no means limitative.

(Properties of water ink)

The static surface tension of ink according to the present invention is preferably 20 to 50 dynes/cm at 20°C.

The static surface tension in water ink according to the present invention is referred to as such when the ink surface is stationary. More specifically, it is referred to as such 30 seconds after ink surface formation. It can be measured by, for instance, a Wilherm plate suspension method. If it is above 50 dynes/cm or below 20 dynes/cm, the ink jetting may be unstable. In addition, the permeation and drying properties on printing paper may be unsatisfactory, and high quality print images may not be obtained.

According to the present invention, the contact angle of water ink 30 seconds after attaching the same to head member is preferably at most 10 degrees. This contact angle can be measured by a dropping method (1/2θ). The contact angle 30 seconds after attaching ink is defined as an angle between ink and a measuring instrument plate 30 seconds after attaching ink thereto. By the term "head member" is meant the entire member constituting the recording head. Examples of this member are Ni (nickel) plate, SUS304 plate, etc. These examples are by no means limitative. With a contact angle of more than 10 degrees 30 seconds after attaching ink, the wetting property of ink in ink passage of the head may be unsatisfactory, possibly resulting in air bubble trapping in the ink passage and extremely deteriorated ink jetting stability.

According to the present invention, the contact angle of water ink 0.1 second after attaching the same to a head member is preferably at most 30 degrees. This contact angle can be measured by the dropping method (1/2θ). The contact angle 0.1 second after attaching ink is defined as an angle after attaching ink to the measuring instrument plate. By the term "head member" is meant the entire member constituting the head. Examples of this member are Ni plate, SUSD304 plate, etc. These examples are by no means limnitative. With a contact angle of more than 30 degrees 0.1 second after attaching ink to the head member, the wetting property of ink in ink passage of the head may be unsatisfactory, possibly resulting in air bubble trapping in the ink passage and extremely deteriorated ink jetting stability.

The viscosity of water ink according to the present invention is preferably adjusted to be in a range of 1 to 5 cps at 20°C. With a viscosity of more than 5 cps, the ink jetting stability of the head may be unsatisfactory. With a viscosity of less than 1 cps, the ink jetting stability of the head may be unsatisfactory, and high quality print images may not be obtained.

Water ink containing acetylene glycol compound or compounds of chemical formula (8) according to the present invention preferably has a pH adjusted to be in a range of 6.5 to 10. By adjusting the pH of water ink to be in the range of 6.5 to 10, it is possible to obtain improved shelf stability, eliminate variations of such physical properties as the surface tension and viscosity and further improve the permeation property. Thus, high quality print images may be obtained.

(Ink reservoir)

An ink reservoir according to the present invention has an ink chamber for storing water ink according to the present invention. At least a portion of the ink chamber which is to be in contact with water ink according to the present invention is made of a material inert to this water ink. The material which is inert to water ink according to the present invention, may be resins, metals, ceramics, etc. which are free from such adverse effect as denaturing on water ink according to the present invention.

(Ink jet recorder)

An ink jet recorder according to the present invention has an ink jet nozzle for jetting out water ink according to the present invention, and is capable of printing or recording on paper or like recording medium by using the ink according to the present invention. While water ink according to the present invention may be used for ink jet recorders for printing or recording by jetting out ink drops, this application is by no means limitative.

Examples of the present invention will now be described. These examples, however, are by no means limitative so long as the scope of the present invention is not departed. The dye used is a water dye, and "polyethyene glycol #200" used is polyethylene glycol having a molecular weight of 200.

The examples of water ink were each prepared by mixing the components of each water ink composition (in parts by weight) given hereinunder and filtering the blend thus obtained through an "Omnipore type JA" membrane filter. The static surface tension, the viscosity and the pH were measured. The static surface tension was measured at a temperature of 20°C by using a Wilherm surface tension meter (i.e., "Automatic surface tension meter CBVP-A3" manufactured by Kyowa Kaimen Kagaku Co., Ltd.). The viscosity was measured at a temperature of 20°C by using "Automatic viscosity meter DVM-E2" manufactured by Tokimec Co., Ltd. The pH was measured at a temperature of 20°C by using "Personal pH meter PH81" manufactured by Yokogawa Electric Co., Ltd.

EXAMPLE 1

This example was prepared from ink composition 1, i.e., 5 parts of a dye, 70 parts of water, 10 parts of "polyethylene glycol #200", 15 parts of glycerin, 0.5 parts of exemplified compound 1 represented by the following chemical formula and 0.02 parts of an ethylene oxide polymer (with a mean molecular weight of 5,000). The exemplified compound 1 is expressed by the following chemical formula.

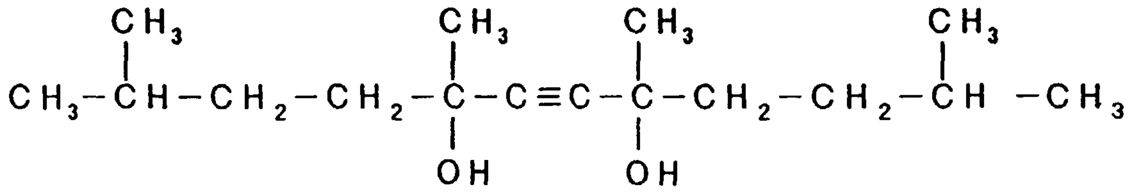

Of the ink composition of this example, the static surface tension was $\gamma$ = 27.8 dynes/cm, the viscosity was $\eta$ = 3.9 cps, and the pH was 8.31.

EXAMPLE 2

This example was prepared from ink composition 1, i.e., 5 parts of a dye, 70 parts of water, 10 parts of "polyethylene glycol #200", 15 parts of glycerin, 0.5 parts of exemplified compound 1.0 represented by the following chemical formula and 0.05 parts of an ethylene oxide polymer (with a mean molecular weight of 5,000).

Of the ink composition of this example, the static surface tension was $\gamma$ = 27.6 dynes/cm, the viscosity was $\eta$ = 4.0 cps, and the pH was 8.55.

EXAMPLE 3

This example was prepared from ink composition 1, i.e., 5 parts of a dye. 70 parts of water, 10 parts of "polyethylene glycol #200", 15 parts of glycerin, 2.0 parts of exemplified compound 1 represented by the following chemical formula and 0.02 parts of an ethylene oxide polymer (with a mean molecular weight of 5,000).

Of the ink composition of this example, the static surface tension was $\gamma$ = 27.5 dynes/cm, the viscosity was $\eta$ = 4.0 cps, and the pH was 8.41.

ECXAMPLE 4

This example was prepared from ink composition 1, i.e., 5 parts of a dye, 70 parts of water, 10 parts of "polyethylene glycol #200", 15 parts of glycerin, 0.05 parts of exemplified compound 2 represented by the following chemical formula and 0.02 parts of an ethylene oxide polymer (with a mean molecular weight of 5,000). The exemplified compound 2 is expressed by the following chemical formula.

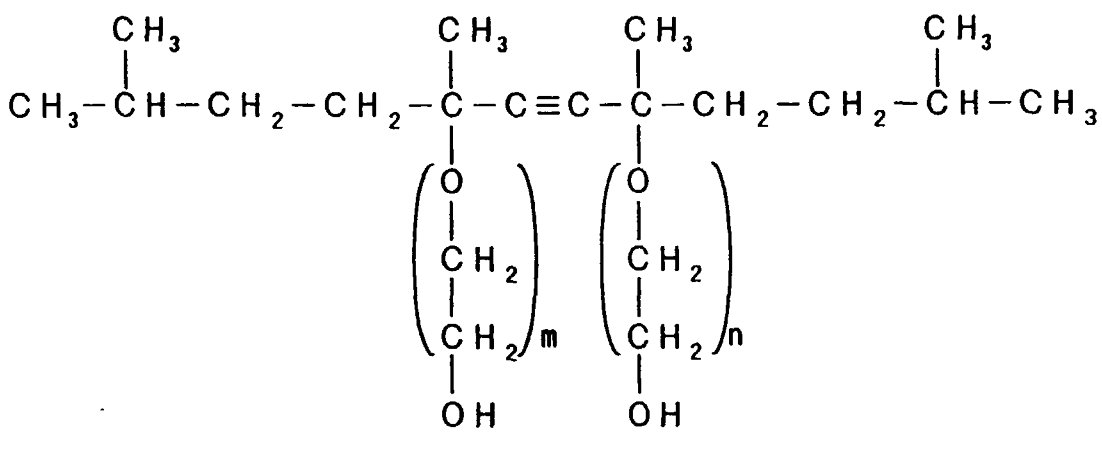

where $m + n = 10$ .

Of the ink composition of this example, the static surface tension was $\gamma$ = 25.8 dynes/cm, the viscosity was

η = 3.8 cps, and the pH was 7.96.

EXAMPLE 5

This example was prepared from ink composition 1, i.e., 5 parts of a dye, 70 parts of water, 10 parts of "polyethylene glycol #200", 15 parts of glycerin, 0.5 parts of exemplified compound 2 represented by the following chemical formula and 0.02 parts of an ethylene oxide polymer (with a mean molecular weight of 5,000).

Of the ink composition of this example, the static surface tension was γ = 25.8 dynes/cm, the viscosity was η = 3.9 cps, and the pH was 8.11.

EXAMPLE 6

This example was prepared from ink composition 1, i.e., 5 parts of a dye, 70 parts of water, 10 parts of "polyethylene glycol #200", 15 parts of glycerin, 2.0 parts of exemplified compound 2 represented by the following chemical formula and 0.05 parts of an ethylene oxide polymer (with a mean molecular weight of 5,000).

Of the ink composition of this example, the static surface tension was γ = 25.8 dynes/cm, the viscosity was η = 3.9 cps, and the pH was 8.06.

EXAMPLE 7

This example was prepared from ink composition 1, i.e., 5 parts of a dye, 70 parts of water, 10 parts of "polyethylene glycol #200", 15 parts of glycerin, 2.0 parts of exemplified compound 1 represented by the following chemical formula and 0.05 parts of an ethylene oxide polymer (with a mean molecular weight of 5,000).

Of the ink composition of this example, the static surface tension was γ = 25.6 dynes/cm, the viscosity was η = 4.2 cps, and the pH was 7.33.

EXAMPLE 8

This example was prepared from ink composition 1, i.e., 5 parts of a dye, 70 parts of water, 10 parts of "polyethylene glycol #200", 15 parts of glycerin, 2,0 parts of exemplified compound 2 represented by the following chemical formula and 0.05 parts of an ethylene oxide polymer (with a mean molecular weight of 5,000).

Of the ink composition of this example the static surface tension was γ = 24.6 dynes/cm, the viscosity was η = 4.9 cps, and the pH was 7.08.

EXAMPLE 9

This example was prepared from ink composition 1, i.e., 5 parts of a dye, 70 parts of water, 10 parts of "polyethylene glycol #200", 15 parts of glycerin, 0.5 parts of exemplified compound 3 represented by the following chemical formula and 0.02 parts of an ethylene oxide polymer (with a mean molecular weight of 5,000).

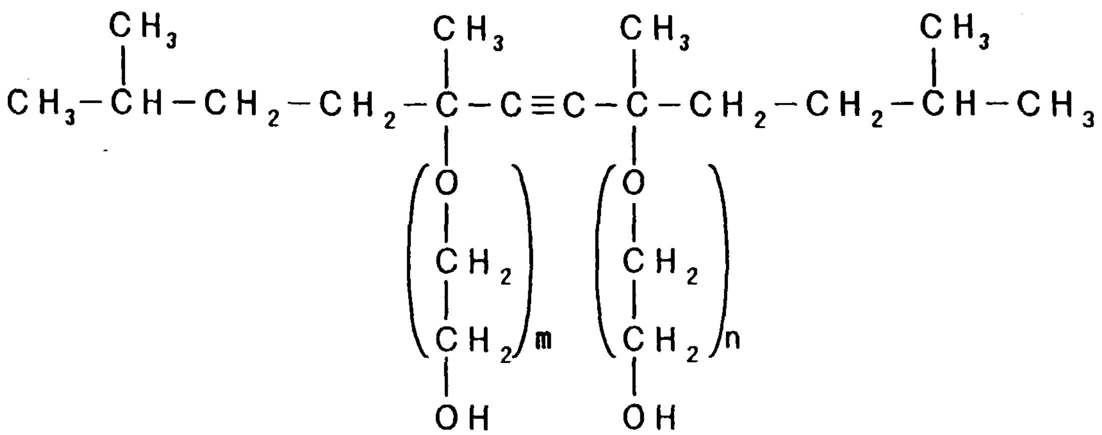

where $m + n = 30$ .

Of the ink composition of this example, the static surface tension was γ =26.3 dynes/cm, the viscosity was η

= 4.7 cps, and the pH was 7.75.

EXAMPLE 10

This example was prepared from ink composition 1, i.e., 5 parts of a dye, 70 parts of water, 10 parts of "polyethylene glycol #200", 15 parts of glycerin, 1.0 parts of exemplified compound 3 represented by the following chemical formula and 0.02 parts of an ethylene oxide polymer (with a mean molecular weight of 5,000).

Of the ink composition of this example, the static surface tension was $\gamma$ = 25.9 dynes/cm, the viscosity was $\eta$ = 4.8 cps, and the pH was 7.99.

EXAMPLE 11

This example was prepared from ink composition 1, i.e., 5 parts of a dye, 70 parts of water, 10 parts of "polyethylene glycol #200", 15 parts of glycerin, 2.0 parts of exemplified compound 3 represented by the following chemical formula and 0.05 parts of an ethylene oxide polymer (with a mean molecular weight of 5,000).

Of the ink composition of this example, the static surface tension was $\gamma$ = 25.3 dynes/cm, the viscosity was $\eta$ = 4.9 cps, and the pH was 8.16.

CONTRAST EXAMPLE 1

This contrast example of water ink was prepared from the composition shown hereinunder without use of any surface active material. Specifically, this water ink was prepared by mixing the components of the composition in a beaker and filtering the blend thus obtained through an "Omnipore type JA" membrane filter. The static surface tension, the viscosity and the pH were measured in the same methods as used for the above examples.

This example was prepared from ink composition 1, i.e., 5 parts of a dye, 70 parts of water, 15 parts of "polyethylene glycol #200", 11 parts of glycerin.

Of the ink composition of this contrast example, the static surface tension was $\gamma$ = 42.7 dynes/cm, the viscosity was $\eta$ = 3.3 cps, and the pH was 8.91.

CONTRAST EXAMPLE 2

This contrast example was prepared from an ink composition obtained by adding 0.2 % by weight of the exemplified compound 1 to the ink composition in Contrast Example 1. The static surface tension, the viscosity and the pH were measured in the same methods as for Contrast Example 1.

Of the ink composition of this contrast example, the static surface tension was $\gamma$ = 33.6 dynes/cm, the viscosity was $\eta$ = 3.3 cps, and the pH was 8.21.

CONTRAST EXAMPLE 3

This contrast example was prepared from an ink composition obtained by adding 20 % by weight of the exemplified compound 1 to the ink composition in Contrast Example 1. The ink thus prepared contained non-dissolved substance and failed to be jetted out.

CONTRAST EXAMPLE 4

This contrast example was prepared by adding 0.2 % by weight of the exemplified compound to the ink composition in Contrast Example 1. The static surface tension, the viscosity and the pH were measured in the same methods as for Contrast Example 1.

Of the ink composition of this contrast example, the static surface tension was $\gamma$ = 26.1 dynes/cm, the viscosity was $\eta$ = 3.9 cps, and the pH was 7.03.

CONTRAST EXAMPLE 5

This contrast example was prepared by adding 2.0 % by weight of the exemplified compound 2 to the ink composition in Contrast Example 1. The ink thus prepared contained non-dissolved substance, and failed to be jetted out.

CONTRAST EXAMPLE 6

This contrast example was prepared by adding 0.2 % by weight of the exemplified compound 3 to the ink composition in Contrast Example 1. The static surface tension, the viscosity, and the pH were measured in the same methods as for Contrast Example 1.

Of the ink composition of this contrast example, the static surface tension was $\gamma$ = 27.6 dynes/cm, the viscosity was $\eta$ = 4.8 cps, and the pH was 8.24.

CONTRAST EXAMPLE 7

This contrast example was prepared by adding 2.0 % by weight of the exemplified compound 3 to the ink composition in Contrast Example 1. The ink thus prepared contained non-dissolved substance, and failed to be jetted out.

CONTRAST EXAMPLE 8

This contrast example was prepared by adding 0.2 % by weight of exemplified compound 4 represented by the following chemical formula to the ink composition in Contrast Example 1. In the following chemical formula of the exemplified compound 4, $m + n > 30$ .

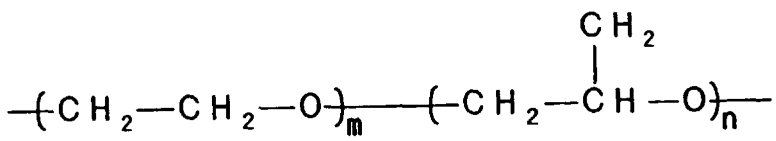

Of the ink composition of this contrast example, the static surface tension was $\gamma$ = 26.4 dynes/cm, the viscosity was $\eta$ = 3.8 cps, and the pH was 8.96.

(Evaluation 1)

The contact angle 30 seconds after attaching ink drops to a SUS304 plate was measured. The measuring temperature was set to 20°C.

(Evaluation 2)

The contact angle 0.1 second after attaching ink drops to the SUS304 plate was measured. Measuring temperature was set to 20°C.

(Evaluation 3)

Test printing was made by using a piezo ink jet printer having a resolution of 720 dpi, and image sharpness was confirmed. As recording paper, commercially available re-circulation paper was used.

1) Spreading test: Spreading was judged from print images.

○: Not spread
△: Slightly spread
X: Spread

2) Drying property test: Drying time of print samples was checked.

○: Drying time is shorter than 10 seconds.
△: Drying time is longer than 10 seconds and shorter than 20 second.
X: Drying time is longer than 20 seconds.

3) Water-proof property test: Print samples were held dipped in water for 30 seconds, and image density changes were checked. Color density was measured by using a color meter (L*, a*, b*), and the image density changes were judged from the rate ΔE of change in the color density.

$$\Delta E = \sqrt{((A^*-a^*)^2+(B^*-b^*)^2+(C^*-c^*)^2)}$$

◯: ΔE is less than 5.
△: ΔE is more than 5 and less than 10.
X: ΔE is more than 10.

(Evaluation 4)

Printing was done on 100 A4 printing paper sheets, and the ink jetting stability was checked.

◯: All print images are satisfactory.
△: Abnormal print images are found.
X: Many abnormal print images are found.

(Evaluation 5)

The shelf stability of the ink composition was checked. Specifically, ink was preserved in a polyethylene container at 60°C for one month, and then changes in the surface tension, the viscosity and the pH and also any precipitate were checked.

◯: Substantially no physical property changes are detected, and no precipitate is conformed.
△: Physical property changes are detected, and precipitate was confirmed.
X: Physical property changes are detected, and much precipitate is confirmed.

Of the above examples and contrast examples of ink, results of valuation of the static contact angle, the dynamic contact angle, the spreading, the drying time and the water-proof property are listed in Table 2, and the ink jetting stability and the shelf stability are listed in Table 3.

TABLE 2

| | STATIC CONTACT ANGLE | DYNAMIC CONTACT ANGLE | SPREADING | DRYING TIME | WATER-PROFF PROPETY |
|---|---|---|---|---|---|
| EXAMPLE1 | <5.0 | 23.1 | ◯ | ◯ | ◯ |
| EXAMPLE2 | <5.0 | 22.8 | ◯ | ◯ | ◯ |
| EXAMPLE3 | <5.0 | 22.8 | ◯ | ◯ | ◯ |
| EXAMPLE4 | <5.0 | 10.8 | ◯ | ◯ | ◯ |
| EXAMPLE5 | <5.0 | 10.1 | ◯ | ◯ | ◯ |
| EXAMPLE6 | <5.0 | 10.7 | ◯ | ◯ | ◯ |
| EXAMPLE7 | <5.0 | 10.9 | ◯ | ◯ | ◯ |
| EXAMPLE8 | <5.0 | 10.2 | ◯ | ◯ | ◯ |
| EXAMPLE9 | 11.6 | 29.6 | ◯ | ◯ | △ |
| EXAMPLE10 | 8.7 | 27.5 | ◯ | ◯ | △ |
| EXAMPLE11 | <5.0 | 25.5 | ◯ | ◯ | △ |
| CONTARST EXAMPLE1 | 34.0 | 44.5 | X | X | X |
| CONTARST EXAMPLE2 | 8.6 | 27.7 | △ | △ | ◯ |

TABLE 2 (continued)

| | STATIC CONTACT ANGLE | DYNAMIC CONTACT ANGLE | SPREADING | DRYING TIME | WATER-PROFF PROPETY |
|---|---|---|---|---|---|
| CONTARST EXAMPLE3 | - | - | - | - | - |
| CONTARST EXAMPLE4 | 9.9 | 30.6 | ○ | △ | △ |
| CONTARST EXAMPLE5 | - | - | - | - | - |
| CONTARST EXAMPLE6 | 12.1 | 32.1 | △ | ○ | △ |
| CONTARST EXAMPLE7 | - | - | - | - | - |
| CONTARST EXAMPLE8 | 13.1 | 43.1 | X | △ | X |

TABLE 3

| | INK JETTING STABILITY | SHELF STABILITY |
|---|---|---|
| EXAMPLE1 | ○ | ○ |
| EXAMPLE2 | ○ | ○ |
| EXAMPLE3 | ○ | ○ |
| EXAMPLE4 | ○ | ○ |
| EXAMPLE5 | ○ | ○ |
| EXAMPLE6 | ○ | ○ |
| EXAMPLE7 | ○ | ○ |
| EXAMPLE8 | ○ | ○ |
| EXAMPLE9 | ○ | ○ |
| EXAMPLE10 | ○ | ○ |
| EXAMPLE11 | ○ | ○ |
| CONTARST EXAMPLE1 | X | ○ |
| CONTARST EXAMPLE2 | ○ | X |
| CONTARST EXAMPLE3 | - | - |
| CONTARST EXAMPLE4 | △ | △ |
| CONTARST EXAMPLE5 | - | - |
| CONTARST EXAMPLE6 | ○ | X |
| CONTARST EXAMPLE7 | - | - |
| CONTARST EXAMPLE8 | X | X |

As has been described in the foregoing, according to the present invention the following advantages are obtainable.

As a first advantage, water ink according to the present invention is excellent in the ink jetting property,

quickly dried on paper, excellent in the permeation property and less spread over and penetrated through paper.

This effect is obtainable owing to the fact that water ink according to the present invention is composed of one or more acetylene glycol compounds represented by the chemical formula (3), one or more acetylene oxide polymers represented by the chemical formula (4), a coloring material and water.

As a second advantage, water ink according to the present invention is excellent in the water-proof property and the shelf stability. This is so owing to the same reasons as for the first effect.

The ink reservoir according to the present invention has an effect that it can preserve water ink according to the present invention for long time. This is so because the ink reservoir according to the present invention has an ink chamber for storing the water ink noted above, which ink chamber has at least a portion to be in contact with the water ink made of a material inert to the water ink. The ink jet recorder according to the present invention has an effect that it is capable of forming images on paper or like recording medium by using water ink according to the present invention. This is so because the ink jet recorder has an ink jet nozzle for jetting out water ink according to the present invention.

Changes in construction will occur to those skilled in the art and various apparently different modifications and embodiments may be made without departing from the scope of the present invention. The matter set forth in the foregoing description and accompanying drawings is offered by way of illustration only. It is therefore intended that the foregoing description be regarded as illustrative rather than limiting.

**Claims**

1. A water ink composed of at least water, a coloring material, an organic solvent and a surface active material, which contains at least one kind of surface active material represented by the following chemical formula (1).

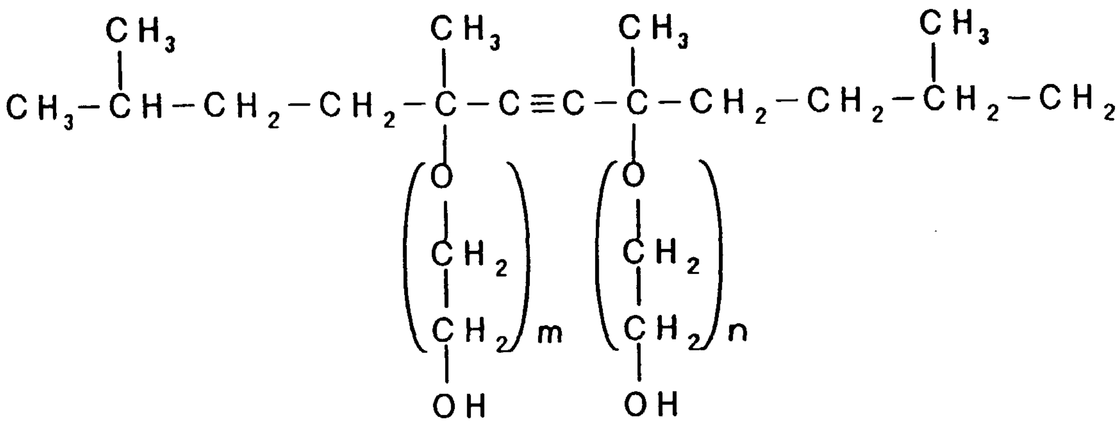

2. The water ink according to claim 1, wherein the coloring material is water dye.

3. The water ink according to claim 1 or 2, wherein the organic solvent is at least one kind of organic compound selected from the group consisting of diethylene glycol, propylene glycol, polyethylene glycol, glycerin, triethyleneglycol monobutylether and diethyelneglycol monobutylether.

4. The water ink according to claim 1, 2 or 3, wherein the content of the compound represented by chemical formula 1 is 0.01 to 1.0 % by weight.

5. The water ink according to claim 1, 2, 3 or 4, wherein m and n in chemical formula 1 are integers, with (m + n) being 1 to 30.

6. The water ink according to claim 1, 2, 3, 4 or 5, wherein the static surface tension is 20 to 30 dynes/cm.

7. The water ink according to any one of claims 1 to 6, wherein the angle of its contact with a head member of an ink jet recorder head 30 seconds after its attaching to the head member is at most 30 degrees.

8. The water ink according to any one of claims 1 to 6, wherein the angle of its contact with a head member of an ink

jet recorder head 0.1 second after its attaching to the head member is at most 10 degrees.

**9.** The water ink according to any one of claims 1 to 8, wherein the pH is 6.5 to 10.0.

**10.** The water ink according to any one of claims 1 to 9, wherein the viscosity is 1 to 5 cps.

**11.** An ink jet recorder comprising:

an ink jet recording head having a nozzle orifice for jetting ink drops onto paper as a recording medium;
an ink reservoir;
an ink feeder means for feeding ink from the ink reservoir to the recording head;
the ink reservoir containing the water ink according to one of claims 1 to 10.

**12.** Water ink composed of one or more members of the group consisting of acetylene glycol compounds represented by the following chemical formula (2):

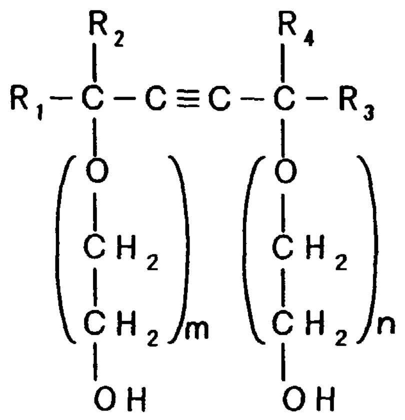

(where R1 and R3 each represent an alkyl group with a carbon number of 4 to 17 and having a branch, R2 and R4 each represent an alkyl group with a carbon number of 1 to 10, and m and n are each zero or a positive integer), one or more members of the group consisting of alkylene oxide polymers represented by the following chemical formula (3)

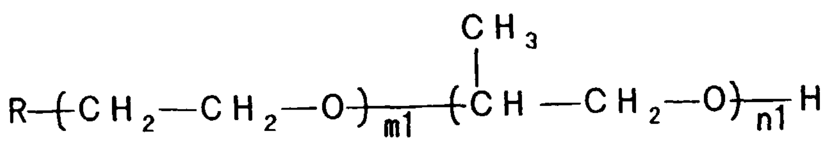

(where m1 and n1 are each zero or a positive integer, and R represents a member of the group consisting of H, an alkyl group with a carbon number of 1 to 10 and an alkoxyl group with a carbon number of 1 to 10), a coloring material, and water.

**13.** The water ink according to claim 12, wherein one or more members of the group consisting of acetylene glycol compounds represented by the following chemical formula (4):

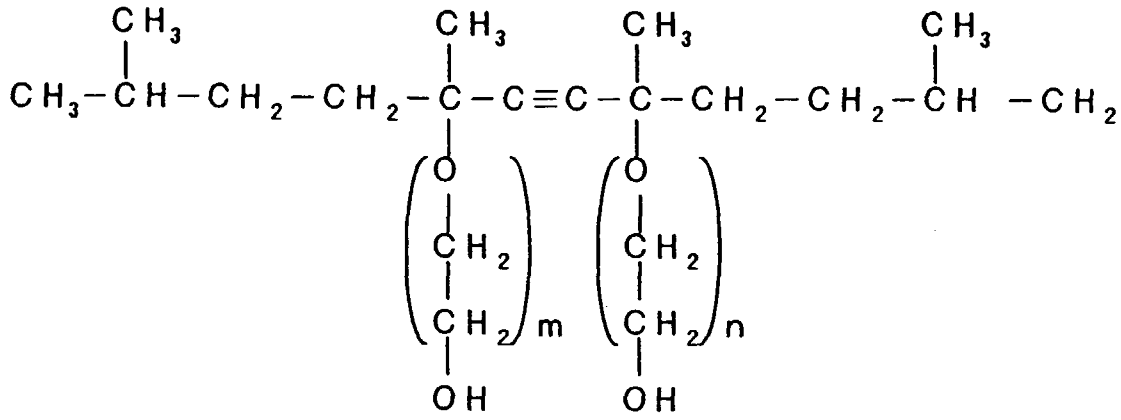

(where m and n are each zero or a positive integer) are contained as a member or members of the group of acetylene glycol compounds represented by the chemical formula (3).

**14.** The water ink according to one of claims 12 and 13, wherein the weight ratio of the acetylene glycol compound content and the alkylene oxide polymer content is 0.01 to 10.0 : 0.01 to 5.

**15.** The water ink according to one of claims 12 to 14, wherein the coloring material is a water dye.

**16.** The water ink according to claim 15, wherein the weight ratio of the acetylene glycol compound content and the water dye content is 0.01 to 10 : 0.1 to 10.

**17.** The water ink according to one of claims 12 to 16, which contains an organic solvent.

**18.** The water ink according to one of claims 12 to 17, wherein the weight ratio of the acetylene glycol compound content and the organic material content is 0.01 to 10 : 5 to 50.

**19.** The water ink according to one of claims 12 to 18, wherein (m + n) in chemical formula (3) or (5) ranges from 1 to 30, and m1 and n1 in chemical formula (4) are each a positive integer.

**20.** The water ink according to one of claims 12 to 19, which contains 0.01 to 10.09 % by weight of a compound or compounds represented by the chemical formula (4).

**21.** The water ink according to one of claims 12 to 20, which contains 0.001 to 5.0 % by weight of a polymer or polymers represented by the chemical formula (5).

**22.** The water ink according to one of claims 15 to 19, which contains 0.1 to 10 % by weight of the water dye.

**23.** The water ink according to one of claims 17 to 22, which contains 5 to 50 % by weight of the organic solvent.

**24.** The water ink according to one of claims 17 to 23, wherein the organic solvent is a water-soluble organic solvent.

**25.** The water ink according to one of claims 17 to 24, which contains one or organic compounds selected from the group consisting of ethylene glycol, diethylene glycol, propylene glycol, polyethylene glycol, glycerin, triethyleneglycol monobutylether and diethyleneglycol monobutylether.

**26.** The water ink according to one of claims 12 to 25, which has a static surface tension at 20°C of 20 to 50 dynes/cm.

**27.** The water ink according to one of claims 12 to 26, which has a pH of 6.5 to 10.

**28.** The water ink according to one of claims 12 to 27, which has a viscosity at 20°C of 1 to 5 cps.

**29.** An ink reservoir having an ink chamber for storing water ink according to one of claims 12 to 28, wherein at least a portion of the ink chamber that is to be in contact with the water ink is made of a material inert thereto.

**30.** An ink jet recorder having an ink jet nozzle for jetting out the water ink according to one of claims 12 to 29.

European Patent Office

# EUROPEAN SEARCH REPORT

Application Number
EP 99 12 4866

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 878 522 A (SEIKO EPSON CORP) 18 November 1998 (1998-11-18)<br>* page 4, line 4 - page 5, line 9 *<br>* page 5, line 25 - page 6, line 2 *<br>* page 8, line 16 - page 9, line 9 * | 1-5,11, 12,29,30 | C09D11/00 |
| A | EP 0 649 888 A (SEIKO EPSON CORP) 26 April 1995 (1995-04-26)<br>* page 4, line 6-25 *<br>* page 4, line 33-40 *<br>* page 4, line 55 - page 5, line 35 *<br>* page 5, line 46-53 * | 1-4,6-8, 10,11, 29,30 | |
| A | EP 0 619 349 A (SEIKO EPSON CORP) 12 October 1994 (1994-10-12)<br>* page 5, line 27-43 *<br>* page 5, line 9-26; figures 1-13 * | 1-4,11, 29,30 | |
| A | EP 0 592 774 A (CANON KK) 20 April 1994 (1994-04-20)<br>* page 5, line 28-38 *<br>* page 13, line 9-53; figures 3-8 * | 1-3,5, 11,12, 29,30 | TECHNICAL FIELDS SEARCHED (Int.Cl.7)<br>C09D |

The present search report has been drawn up for all claims

| Place of search | Date of completion of the search | Examiner |
|---|---|---|
| THE HAGUE | 22 March 2000 | Miller, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 12 4866

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2000

| Patent document cited in search report | Publication date | Patent family member(s) | Publication date |
|---|---|---|---|
| EP 0878522 A | 18-11-1998 | JP 11080639 A | 26-03-1999 |
| EP 0649888 A | 26-04-1995 | DE 69418135 D | 02-06-1999 |
| | | DE 69418135 T | 28-10-1999 |
| | | JP 8113739 A | 07-05-1996 |
| | | SG 45417 A | 16-01-1998 |
| | | US 5560770 A | 01-10-1996 |
| EP 0619349 A | 12-10-1994 | JP 6256696 A | 13-09-1994 |
| | | DE 69400325 D | 29-08-1996 |
| | | DE 69400325 T | 02-01-1997 |
| | | US 5397386 A | 14-03-1995 |
| EP 0592774 A | 20-04-1994 | JP 6271802 A | 27-09-1994 |
| | | JP 6025573 A | 01-02-1994 |
| | | JP 6024123 A | 01-02-1994 |
| | | AU 666951 B | 29-02-1996 |
| | | AU 4186593 A | 13-01-1994 |
| | | AU 682993 B | 23-10-1997 |
| | | AU 5451696 A | 01-08-1996 |
| | | CA 2100201 A | 11-01-1994 |
| | | EP 0974627 A | 26-01-2000 |
| | | KR 138890 B | 28-04-1998 |
| | | US 5395434 A | 07-03-1995 |
| | | KR 138802 B | 28-04-1998 |

EPO FORM P0459

For more details about this annex : see Official Journal of the European Patent Office, No. 12/82